# EUROPÄISCHE PATENTSCHRIFT

(11) **EP 3 390 188 B1**
(45) Veröffentlichungstag und Bekanntmachung des Hinweises auf die Patenterteilung: **21.02.2024**
(21) Anmeldenummer: 16798455.8
(22) Anmeldetag: 16.11.2016
(51) Int. Cl.: B60K 35/00, B60K 37/06, B60W 50/08

(54) **BEDIENEINRICHTUNG ZUR VORGABE DES GRADS DER UNTERSTÜTZUNG DURCH EINE FAHRERASSISTENZ**
OPERATING DEVICE FOR SPECIFYING THE DEGREE OF ASSISTANCE PROVIDED BY DRIVER ASSISTANCE
DISPOSITIF DE COMMANDE POUR INSTRUCTION DU DEGRÉ D'ASSISTANCE PROVENANT D'UNE AIDE À LA CONDUITE

(30) Priorität: 18.12.2015 DE 102015225932
(43) Veröffentlichungstag der Anmeldung: 24.10.2018
(73) Patentinhaber: Bayerische Motoren Werke Aktiengesellschaft, 80809 München (DE)
(72) Erfinder: MARONDE, Roberto, 80687 München (DE); LEE, Dongkyu, 80634 München (DE)
(86) Internationale Anmeldenummer: PCT/EP2016/077795
(87) Internationale Veröffentlichungsnummer: WO 2017/102226

(56) Entgegenhaltungen:
- EP-A1- 2 930 081
- WO-A1-2013/117309
- DE-A1-102009 033 752
- DE-A1-102011 105 435
- DE-A1-102012 002 307

## Beschreibung

Die Erfindung betrifft eine Bedieneinrichtung zur fahrerseitigen Vorgabe des Grads der Unterstützung des Fahrers eines Kraftfahrzeugs durch eine fahrzeugseitige Fahrerassistenz.

Die Fahrerassistenz unterstützt den Fahrer in seiner Fahraufgabe. Hierbei sind unterschiedliche Unterstützungsgrade möglich. Beispielsweise führt der Fahrer bei einem geringen Unterstützungsgrad dauerhaft die Längs- und Querführung selbst durch. Hierbei kann die Fahrstabilität durch ein Fahrstabilitätsregelsystem die Fahrstabilität überwacht werden, wobei die Fahrerassistenz zur Erhaltung der Fahrstabilität in kritischen Situationen eingreift. Bei einem dazu höheren Unterstützungsgrad übernimmt beispielsweise die Fahrerassistenz für einen längeren Zeitraum die Längsführung oder Querführung des Kraftfahrzeugs; beispielsweise ist dann eine Geschwindigkeitsregelung aktiv. Dies wird häufig als assistiertes Fahren bezeichnet. Mit weiterer Zunahme der Unterstützung übernimmt die Fahrerassistenz beispielsweise die Längs- und Querführung, jedoch muss der Fahrer das System dauerhaft überwachen. Dies wird auch als teilautomatisiertes Fahren bezeichnet. Ferner kann bei weiterer Zunahme der Unterstützung der Fahrerassistenz vorgesehen sein, dass das System im Sinne eines hochautomatisierten Fahrens die Längsführung und die Querführung übernimmt, wobei der Fahrer das System nicht mehr dauerhaft überwachen muss. Der Fahrer muss dann in der Lage sein, innerhalb einer bestimmten Zeit, die Fahraufgabe zu übernehmen, wenn das System den Fahrer zur Übernahme auffordert. Beispielhafte verschiedene Stufen des Automatisierungsgrads sind in auf der Webseite "www.vda.de/de/themen/innovation-und-technik/automatisiertesfahren/automatisiertes-fahren.html" beschrieben.

Die Erhöhung oder Verringerung des Grads der Unterstützung kann beispielsweise auch durch ein Aktivieren bzw. Deaktivieren eines oder mehrerer weiterer Fahrerassistenzfunktionen erreicht werden.

Zur Aktivierung, Deaktivierung und Einstellung einzelne Assistenzfunktionen wie beispielsweise der Geschwindigkeitsregelung, der Distanzkontrolle und der Geschwindigkeitsbegrenzung sind häufig eine Vielzahl von Bedienelementen, z. B. Tasten, im Fahrzeugcockpit, insbesondere um das Lenkrad herum oder direkt am Lenkrad vorhanden. Durch die Vielzahl der Bedienelemente kann das Fahrzeugcockpit, insbesondere das Lenkrad, mit Bedienmöglichkeiten überfrachtet werden, so dass der Fahrer durch die Komplexität der Bedienmöglichkeiten eventuell verwirrt oder gar auch abgelenkt werden könnte.

Es sind Bedienkonzepte bekannt, bei denen der Unterstützungsgrad der Unterstützung durch die Fahrerassistenz, insbesondere der Automatisierungsgrad, durch ein oder zwei Bedienelemente zentral eingestellt werden kann.

Beispielsweise beschreibt die Druckschrift DE 10 2011 105 435 A1 eine Bedienvorrichtung, bei der der Automatisierungsgrad der Fahrerassistenz über einen ersten Taster erhöht und über einen zweiten Taster verringert werden kann. Mittels einer dazu separaten Kreuzwippe kann die Soll-Geschwindigkeit oder der Soll-Abstand zu einem vorausfahrenden Fahrzeug bei einer adaptiven Geschwindigkeitsregelung (ACC - adaptive cruise control) eingestellt werden.

In der Druckschrift DE 10 2010 046 918 A1 ist eine Bedieneinrichtung beschrieben, wobei der Automatisierungsgrad des Fahrerassistenzsystems über zwei Tasten oder alternativ über einen Schiebesteller eingestellt werden kann.

In der Druckschrift WO 2013/117309 A1 ist eine weitere Bedieneinrichtung beschrieben.

Auch in der Druckschrift DE 10 2010 046 917 A1 ist die Einstellung des Automatisierungsgrads des Fahrerassistenzsystems über zwei Tasten beschrieben.

Die Druckschrift DE 10 2012 016 774 A1 beschreibt eine Eingabevorrichtung für ein Kraftfahrzeug, bei der über einen Schiebesteller der Grad der Unterstützung von Fahrerassistenzsystemen zwischen "Deaktiviert", "Warnung" und "Eingriff" eingestellt werden kann.

In der Druckschrift DE 103 34 587 A1 ist ferner ein Schiebesteller beschrieben, bei dem die Fahrerassistenz zwischen den Extremwerten "volle Assistenz" und "Eigenverantwortung" eingestellt werden kann.

Ferner wird noch auf die Druckschrift DE 10 2010 063 792 A1 hingewiesen, in der mittels eines Schiebestellers die Intensität der Fahrerassistenz eingestellt werden, wobei mit Zunahme der Intensität eine oder mehrere Fahrerassistenzfunktionen aktiviert werden und mit Abnahme der Intensität eine oder mehrere Fahrerassistenzfunktionen deaktiviert werden.

Es ist Aufgabe der Erfindung, eine verbesserte Bedieneinrichtung zur fahrerseitigen Vorgabe des Unterstützungsgrads der Fahrerassistenz anzugeben.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft eine Bedieneinrichtung zur fahrerseitigen Vorgabe des Unterstützungsgrads der Unterstützung des Fahrers durch eine fahrzeugseitige Fahrerassistenz eines Kraftfahrzeugs (beispielsweise eines Kraftwagens, insbesondere Personenkraftwagens). Mit der Bedieneinrichtung kann insbesondere der Automatisierungsgrad der Fahrerassistenz eingestellt werden. Die erfindungsgemäße Bedieneinrichtung umfasst ein durch eine erste Bedienart in unterschiedliche Stellungen bewegbares erstes Bedienelement, wobei die einzelnen Stellungen des ersten Bedienelements jeweils unterschiedlichen Unterstützungsgraden, insbesondere unterschiedlichen Automatisierungsgraden, zugeordnet sind. Vorzugsweise sind nicht unendlich viele Stellungen, sondern lediglich mehrere diskrete (d. h. abzählbare) Stellungen möglich, z. B. drei diskrete Stellungen, die drei unterschiedlichen Stufen in der Unterstützung (d. h. drei unterschiedlichen Unterstützungsgraden) zugeordnet sind.

Bei der ersten Bedienart handelt es sich beispielsweise um ein Drehen oder um ein Verschieben. Beispielsweise handelt es sich bei der Bedieneinrichtung um einen Schiebesteller, der durch eine lineare Bewegung auf verschiedene Positionen innerhalb eines linearen Stellbereichs zur Einstellung des Unterstützungsgrads eingestellt werden kann. Der Unterstützungsgrad nimmt dabei vorzugsweise in einer Richtung des linearen Stellbereichs zu, beispielsweise von links nach rechts, von rechts nach links, von oben nach unten oder von unten nach oben. Der Schiebesteller kann als mechanisch verschiebbares Element realisiert sein. Der Schiebesteller kann auch als virtueller Schiebesteller auf einem berührungsempfindlichen Bildschirm implementiert sein, dessen Schiebestellung virtuell auf dem Bildschirm durch Berühren des Bildschirms eingestellt werden kann.

Es kann auch ein Drehsteller vorgesehen sein, bei dem über die Drehstellung des Drehstellers der Unterstützungsgrad der Fahrerassistenz eingestellt werden kann. Der Unterstützungsgrad nimmt dabei vorzugsweise bei Drehung in einer Drehrichtung zu (z. B. bei Drehung im Uhrzeigersinn oder bei Drehung entgegen des Uhrzeigersinns).

Die erfindungsgemäße Bedieneinrichtung kennzeichnet sich dadurch, dass dasselbe erste Bedienelement in zumindest einer der Stellungen (insbesondere in sämtlichen dieser Stellungen) in einer von der ersten Bedienart (z. B. Schieben) verschiedenen Bedienart (z. B. Drehen, Drücken, Wippen) zur Einstellung des Fahrzeugs betätigbar ist. Wenn es sich beispielsweise bei dem Bedienelement grundsätzlich um einen Schiebesteller handelt, kann dieses zur Einstellung des Fahrzeugs beispielsweise (als von der ersten Bedienart verschiedene Bedienart) gedreht werden und/oder gedrückt werden.

Durch die erfindungsgemäße Bedieneinrichtung kann die Komplexität in der Bedienung reduziert werden und die Bedienung vereinfacht werden: Über ein prominentes erstes Bedienelement lässt sich erfindungsgemäß nicht nur der Unterstützungsgrad der Fahrerassistenz durch Bewegung in eine jeweilige Stellung einstellen, sondern darüber hinaus in der gewählten Stellung eine weitere Einstellung des Fahrzeugs vornehmen (wofür bei konventionellen Bedienkonzepten ein weiteres Bedienelement vorgesehen wäre). Die Einstellung des Fahrzeugs betrifft beispielsweise eine weitere Einstellung hinsichtlich der Fahrerassistenz, z. B. die Vorgabe der Soll-Fahrzeuggeschwindigkeit oder des Soll-Abstand zum vorausfahrenden Fahrzeug, oder betrifft beispielsweise die Auswahl eines die Längsdynamik beeinflussenden Fahrmodus.

Die zusätzliche Einstellmöglichkeit des Fahrzeugs betrifft vorzugsweise das Fahrverhalten des Fahrzeugs. Hierunter ist jeder Einflussfaktor zu verstehen, der in irgendeiner Weise Einfluss auf das Fahren des Fahrzeugs hat. Beispielsweise kann im Rahmen der Einstellung des Fahrverhaltens ein die Längsdynamik beeinflussender Fahrmodus ausgewählt werden oder ein Parameter (z. B. eine Soll- oder Maximalgeschwindigkeit oder ein Soll-Abstand) der Fahrerassistenz eingestellt werden, der Einfluss auf das Fahrverhalten hat. Unter der Einstellung des Fahrverhaltens kann auch die Veränderung des Unterstützungsgrads verstanden werden, beispielsweise die Aktivierung eines autonomen Fahrbetriebs, sofern sich das Fahrverhalten nach der Aktivierung von dem Fahrverhalten vor der Aktivierung des autonomen Fahrbetriebs zumindest temporär unterscheidet.

Vorzugsweise ist das erste Bedienelement in zumindest einer der Stellungen in der von der ersten Bedienart verschiedenen Bedienart zur Auswahl eines Fahrmodus aus einer Mehrzahl von unterschiedlichen, die Längsdynamik des Fahrzeugs beeinflussenden, auswählbaren Fahrmodi betätigbar. Über den Fahrmodus wird beispielsweise die Fahrpedalkennlinie oder das Getriebeschaltverhalten beeinflusst. Beispielsweise kann so ein Fahrmodus aus drei oder mehr wählbaren Fahrmodi ausgewählt werden, die beispielsweise als Sport, Comfort und Eco bezeichnet werden. Die Fahrmodi unterscheiden sich in der Agilität des Fahrverhaltens (insbesondere in dem Längsbeschleunigungspotential) und im Kraftstoffverbrauch. Bei einem Fahrmodus mit hoher Agilität ist der Kraftstoffverbrauch höher als in einem Fahrmodus mit im Vergleich dazu geringerer Agilität.

Es kann vorgesehen sein, dass das erste Bedienelement in zumindest einer der Stellungen in einer von der ersten Bedienart verschiedenen Bedienart zur Einstellung eines Parameters der Fahrerassistenz betätigbar ist. Insbesondere kann ein Parameter der Fahrerassistenz in dem der aktuellen Stellung zugeordneten Unterstützungsgrad eingestellt werden. Beispielsweise kann so eine Soll-Fahrzeuggeschwindigkeit für eine Geschwindigkeitsregelung, ein Soll-Abstand zu einem vorausfahrenden Fahrzeug für eine adaptive Geschwindigkeitsregelung oder eine Maximalgeschwindigkeit für eine Geschwindigkeitsbegrenzungsfunktion einstellbar sein.

Eine adaptive Geschwindigkeitsregelung weist typischerweise zumindest zwei Einstellparameter auf: die Soll-Fahrzeuggeschwindigkeit und den Soll-Abstand zum vorausfahrenden Fahrzeug. Beispielsweise kann durch Betätigung des ersten Bedienelements in der von der ersten Bedienart verschiedenen Bedienart einer dieser beiden Einstellparameter eingestellt werden, wohingegen der andere dieser beiden Einstellparameter über zumindest ein weiteres Bedienelements einstellbar ist (beispielsweise über zwei Tasten zum Erhöhen bzw. Erniedrigen des Einstellparameters). Es wäre aber auch denkbar, beide Einstellparameter über das erste Bedienelement einzustellen, indem zunächst die Einstellung eines der beiden Einstellparameter ausgewählt wird und anschließend über das gleiche Bedienelement der ausgewählte Einstellparameter eingestellt wird.

Gemäß einer bevorzugten Ausführungsform ist das erste Bedienelement in derjenigen Stellung, die dem höchsten Unterstützungsgrad (z. B. teilautomatisiertes Fahren) der unterschiedlichen Unterstützungsgrade zugeordnet ist, in einer von der ersten Bedienart verschiedenen Bedienart ohne Änderung dieser Stellung zum Aktivieren eines autonomen Fahrbetriebs betätigbar. Bei dem höchsten Unterstützungsgrad hat der Fahrer die Verantwortung für die Fahraufgabe an das Fahrzeug noch nicht abgegeben, d.h. der Fahrer fährt selbst oder muss die Fahrerassistenz, die die Längsführung und/oder Querführung selbstständig durchführt, kontinuierlich überwachen.

Vor dem Aktivieren des autonomen Fahrbetriebs liegt vorzugsweise dieser Unterstützungsgrad (z. B. teilautomatisiertes Fahren) bereits vor, d. h. die Fahrerassistenz befindet sich in diesem Unterstützungsgrad.

Der höchste Unterstützungsgrad / Automatisierungsgrad (beispielsweise teilautomatisiertes Fahren oder assistiertes Fahren) dieser unterschiedlichen Unterstützungsgrade ist vorzugsweise geringer als der Unterstützungsgrad der Fahrerassistenz nach Aktivieren des autonomen Fahrbetriebs, d. h. durch Aktivieren des autonomen Fahrbetriebs nimmt der Unterstützungsgrad vorzugsweise zu. Es wäre aber auch denkbar, dass der Unterstützungsgrad nicht zunimmt und es sich bei der Aktivierung des autonomen Fahrbetriebs lediglich um eine im Wesentlichen rechtliche Verantwortungsübergabe an das Fahrzeug handelt, ohne dass der Unterstützungsgrad tatsächlich erhöht wird.

Zum Aktivieren des autonomen Fahrbetriebs muss das Bedienelement vorzugsweise für eine Dauer größer oder größer gleich als eine vorgegebene Mindestdauer (z. B. 2 s) betätigt werden, beispielsweise gedrückt werden.

Unter einem autonomen Fahrbetrieb wird ein Grad der Fahrerassistenz verstanden, bei dem der Fahrer zumindest temporär die Verantwortung für die Fahraufgabe an das Fahrzeug abgibt, beispielsweise das sogenannte hochautomatisierte Fahren oder das vollautomatisierte Fahren.

Das Bedienelement wird also zur Aktivierung des autonomen Fahrbetriebs nicht in seiner Stellung in Bezug auf die erste Bedienart verändert, sondern verbleibt in dieser Stellung. Hierdurch ergibt sich der Vorteil, dass im Fall einer vom Fahrzeug initiierten Deaktivierung des autonomen Fahrbetriebs bei Übergabe der Fahraufgabe an den Fahrer in einer von der Fahrerassistenz nicht sicher beherrschbaren Fahrsituation das Bedienelement nicht in seiner in Bezug auf die erste Bedienart einstellbaren Stellung automatisch verändert werden muss. Dies würde nämlich ein entsprechend aufwändiges Bedienelement voraussetzen, welches über eine geeignete Aktorik automatisch in seiner Position verschiebbar wäre und beispielsweise bei automatischer Deaktivierung in die vorherige Stellung zurückspringen würde. Bei der bevorzugten Ausführungsform kann auf diese Aktorik verzichtet werden.

Außerdem ist sich der Fahrer aufgrund der von der ersten Bedienart verschiedenen Bedienart zum Aktiveren des autonomen Fahrbetriebs bewusst, dass er dann tatsächlich den autonomen Fahrmodus aktiviert. Sofern der Fahrer im Gegensatz zu diesem erfindungsgemäßen Konzept zum Aktivieren des autonomen Fahrmodus nur die Stellung des ersten Bedienelements durch die ersten Bedienart verändern muss, kann sich die Gefahr ergeben, dass der Fahrer ungewollt den autonomen Fahrbetrieb aktiviert, wenn er den Unterstützungsgrad ändert, oder ungewollt in den falschen Unterstützungsgrad umschaltet, obwohl der Fahrer den autonomen Fahrbetrieb aktivieren wollte.

Vorzugsweise wird bei Aktivieren des autonomen Fahrbetriebs die Funktionalität der Fahrerassistenz erweitert, d. h. der Unterstützungsgrad, insbesondere Automatisierungsgrad, erhöht. Es wird aber darauf hingewiesen, dass die Funktionalität der Fahrerassistenz vor und nach dem Aktivieren des autonomen Fahrbetriebs auch identisch sein könnte und die Aktivierung des autonomen Fahrbetriebs lediglich anzeigt, dass der Fahrer willentlich die Verantwortung an das Fahrzeug abgibt (ohne dass dies Einfluss auf die Fahrerassistenz hat). Es kann sich bei der Aktivierung des autonomen Fahrbetriebs um eine im Wesentlichen rechtliche Verantwortungsübergabe an das Fahrzeug handeln, ohne dass die Fahrerassistenz in seiner Funktion erweitert wird.

Es ist von Vorteil, wenn das erste Bedienelement in derjenigen Stellung, die dem geringsten Unterstützungsgrad (beispielsweise manuelles Fahren ohne automatisierte Längsführung oder Querführung) der unterschiedlichen Unterstützungsgrade zugeordnet ist, bei dem ein Fahrstabilitätsregelsystem die Fahrstabilität überwacht, in einer von der ersten Bedienart verschiedenen Bedienart betätigbar ist. Bei dem Fahrstabilitätsregelsystem handelt es sich beispielsweise um ein sogenanntes ESP-System (Electronic Stability Control - Elektronisches Stabilitätsprogramm), das selbstständig einzelne Räder bremsen kann.

Durch Betätigen des ersten Bedienelements in der von der ersten Bedienart verschiedenen Bedienart wird dann das Fahrstabilitätsregelsystem zumindest teilweise (insbesondere vollständig) deaktiviert. Zum zumindest teilweisen Deaktivieren muss das Bedienelement vorzugsweise für eine Dauer größer oder größer gleich als eine vorgegebene Mindestdauer (z. B. 2 s) betätigt werden, beispielsweise gedrückt werden.

Dies hat den Vorteil, dass sich der Fahrer aufgrund der von der ersten Bedienart verschiedenen Bedienart zum Deaktivieren des Fahrstabilitätsregelsystems bewusst ist, dass er das Fahrstabilitätsregelsystem vollständig oder zumindest teilweise deaktiviert. Sofern der Fahrer im Gegensatz zu diesem erfindungsgemäßen Konzept zum Deaktivieren des Fahrstabilitätsregelsystems nur die Stellung des ersten Bedienelements durch die ersten Bedienart verändern muss, kann sich die Gefahr ergeben, dass der Fahrer ungewollt das Fahrstabilitätsregelsystem deaktiviert, wenn er den Unterstützungsgrad ändert, oder ungewollt in den falschen Unterstützungsgrad umschaltet, obwohl der Fahrer das Fahrstabilitätsregelsystem deaktivieren wollte.

Vorstehend wurden das Aktivieren des autonomen Fahrbetriebs und das Deaktivieren des Fahrstabilitätsregelsystems durch eine von der ersten Bedienart verschiedenen Bedienart diskutiert. Es ist von Vorteil, wenn in Bezug auf das Aktivieren des autonomen Fahrbetriebs oder in Bezug auf das Deaktivieren des Fahrstabilitätsregelsystems die von der ersten Bedienart verschiedene Bedienart ein Drücken des ersten Bedienelements ist. Zum Aktivieren des autonomen Fahrbetriebs bzw. zumindest teilweisen Deaktivieren des Fahrstabilitätsregelsystems muss das erste Bedienelement also vorzugsweise gedrückt werden, insbesondere für eine Zeitdauer größer oder größer gleich einer Zeitdauerschwelle. Die Zeitdauerschwelle liegt beispielsweise im Bereich von 0,5 s bis 5 s und beträgt beispielsweise 2 s.

Vorzugsweise weist die Fahrerassistenz insgesamt n₁ (z. B. n₁ = 5) diskrete unterschiedliche Stufen der Unterstützung auf (d. h. n₁ Unterstützungsgrade), wohingegen das Bedienelement durch die erste Bedienart in insgesamt n₂ verschiedene Stellungen bewegbar ist, mit n₂ < n₁ (z. B. n₂ = n₁ - 2). Es können beispielsweise n₂ - n₁ verschiedene Unterstützungsgrade (beispielsweise 2) jeweils aktiviert werden, indem das erste Bedienelement jeweils in einer bestimmten Stellung der n₂ Stellungen in einer jeweils von der ersten Bedienart verschiedenen Bedienart ohne Änderung der aktuellen Stellung betätigt wird, beispielsweise gedrückt wird, wie dies vorstehend beschrieben wurde.

Es ist von Vorteil, wenn das erste Bedienelement zwischen zumindest zwei diskreten Stellungen, insbesondere zwischen drei diskreten Stellungen bewegbar ist. Diese Stellungen umfassen beispielsweise eine dem rein manuellen Fahrbetrieb zugeordnete Stellung, in der Fahrer sowohl die Längsführung als auch die Querführung des Fahrzeugs selbst ausführt. Es kann vorgesehen sein, dass in dieser Stellung das Fahrstabilitätsregelsystem aktiv ist. Diese Stellung umfasst beispielsweise lediglich die Fahrerassistenz zur Gewährleistung einer Fahrstabilität des Fahrzeugs. In diesem Fall kann das Fahrstabilitätsregelsystem beispielsweise in der vorstehend beschriebenen Form teilweise oder vollständig deaktiviert werden.

Ferner kann zusätzlich eine Stellung mit gegenüber der vorstehend genannten Stellung erhöhtem Unterstützungsgrad vorgesehen sein, in der die Fahrerassistenz die Längsführung des Fahrzeugs übernimmt, jedoch nicht die Querführung. In dieser Stellung ist beispielsweise eine adaptive Geschwindigkeitsregelung (beispielsweise zusätzlich zu dem Fahrstabilitätsregelsystem) aktiviert.

Zusätzlich (oder auch alternativ) kann eine Stellung mit gegenüber der vorstehend genannten Stellung erhöhtem Unterstützungsgrad vorgesehen sein, in der die Fahrerassistenz sowohl die Längsführung als auch die Querführung des Fahrzeugs übernimmt. In dieser Stellung sind beispielsweise eine adaptive Geschwindigkeitsregelung und ein Querführungsassistent mit selbstständigem Lenken (beispielsweise zusätzlich zu dem Fahrstabilitätsregelsystem) aktiviert.

Wenn das erste Bedienelement zumindest zwischen zwei diskreten Stellungen, insbesondere zwischen drei diskreten Stellungen, durch die erste Bedienart bewegbar ist, kann vorgesehen sein, dass die Bedieneinrichtung eingerichtet ist, bei fahrerseitigem Bewegen des ersten Bedienelements von einer der Stellungen in eine andere der Stellungen einen automatischen Fahrmoduswechsel von einem Fahrmodus aus einer Mehrzahl von unterschiedlichen, die Längsdynamik des Fahrzeugs beeinflussenden, einstellbaren Fahrmodi zu einem anderen Fahrmodus der Fahrmodi auszulösen. Dieser Gedanke ist nicht an die kennzeichnenden Merkmale der nebengeordneten Ansprüche gebunden.

Bei Erhöhen des Unterstützungsgrads wird beispielsweise ein Fahrmodus automatisch eingestellt, der eine geringere Agilität und/oder einen geringeren Kraftstoffverbrach als der vor dem Erhöhen eingestellte Fahrmodus aufweist.

Bei Verringern des Unterstützungsgrads wird beispielsweise ein Fahrmodus automatisch eingestellt, der eine höhere Agilität und/oder einen höheren Kraftstoffverbrach als der vor dem Verringern eingestellte Fahrmodus aufweist.

Beispielsweise wird im Fall von zumindest drei diskreten Stellungen mit unterschiedlichen Unterstützungsgraden bei eingestellten Sport-Modus in der Stellung mit dem geringsten Unterstützungsgrad automatisch in den Comfort-Modus umgeschaltet, wenn der Fahrer die Stellung mit dem zweitgeringsten Unterstützungsgrad wählt. Es wird dann beispielsweise bei eingestelltem Comfort-Modus in der Stellung mit dem zweitgeringsten Unterstützungsgrad in den ECO-Modus automatisch umgeschaltet, wenn der Fahrer die Stellung mit dem drittgeringsten Unterstützungsgrad wählt.

Das erste Bedienelement ist in zumindest einer der Stellungen auf eine von der ersten Bedienart verschiedene Bedienart zur Einstellung des Fahrzeugs betätigbar, beispielsweise durch Drücken und/oder Drehen des ersten Bedienelements.

Vorzugsweise ist erste Bedienelement nicht nur auf zwei verschiedene Bedienarten betätigbar, sondern zumindest auf drei verschiedene Bedienarten. Hierdurch können mehr Bedienfunktionen durch das erste Bedienelement abgedeckt werden. Beispielsweise ist das erste Bedienelement neben der Bewegbarkeit in die verschiedenen Stellungen drehbar und drückbar.

Es handelt sich vorzugsweise bei dem ersten Bedienelement um einen in die unterschiedlichen Stellungen verschiebbaren Schiebesteller mit Dreh-Drücksteller. Dies bedeutet, dass der Schiebesteller zusätzlich auch gedreht und gedrückt werden kann. Der Dreh-Drücksteller kann einen drückbaren Drehknopf zum Drehen umfassen. Alternativ zu einem drückbaren Drehknopf kann eine drückbare Einstellwalze verwendet werden, die zur Einstellung gedreht aber auch gedrückt werden kann. Ferner ist auch ein Schiebesteller mit einem drückbaren Wippelement (z. B. in Form eines Hebels oder einer Nase) denkbar, das in vorzugsweise zwei entgegengesetzte Richtungen orthogonal zur Verschieberichtung des Schiebesteller wippbar ist (beispielsweise nach oben und unten, wenn der Schiebesteller nach links und rechts verschoben werden kann) und das zusätzlich gedrückt werden kann.

Vorzugsweise umfasst die Bedieneinrichtung neben dem ersten Bedienelement und ggf. einem oder mehreren weiteren Bedienelementen eine Anzeigeeinrichtung, beispielsweise einen Bildschirm, zur Ausgabe von Information an den Fahrer. Die Information beinhaltet beispielsweise den eingestellten Unterstützungsgrad, den eingestellten Fahrmodus und/oder Einstellparameter der Fahrerassistenz. Die ausgegebene Information hängt vorzugsweise von dem eingestellten Unterstützungsgrad ab: Beispielsweise wird bei manuellem Fahren mit geringem Unterstützungsgrad keine Informationen über die Soll-Geschwindigkeit der Geschwindigkeitsregelung ausgegeben (und stattdessen beispielsweise Information über den gewählten Fahrmodus ausgegeben), wohingegen bei einem höheren Unterstützungsgrad mit aktiverer Geschwindigkeitsregelung Information über die Soll-Geschwindigkeit der Geschwindigkeitsregelung ausgegeben wird.

Es kann sein, dass das erste Bedienelement für eine Zeitdauer größer oder größer gleich einer bestimmte Mindestdauer (z. B. 2 s) gedrückt werden muss, um eine bestimmte Reaktion zu erzielen. Die Reaktion kann dabei von dem jeweils eingestellten Unterstützungsgrad der Fahrerassistenz abhängen (z.B. Deaktivieren des Fahrstabilitätsregelsystems bei einer Stellung mit geringer Unterstützung und Aktivieren des autonomen Fahrmodus bei einer Stellung mit höherer Unterstützung). Die Anzeigeeinrichtung kann beispielsweise ausgegeben, welche Reaktion sich im aktuellen Unterstützungsgrad bei Drücken des Bedienelements ergibt.

Ein zweiter Aspekt der Erfindung betrifft eine Bedieneinrichtung zur fahrerseitigen Vorgabe des Unterstützungsgrads der Unterstützung des Fahrers durch eine fahrzeugseitige Fahrerassistenz, welche ein durch eine erste Bedienart in unterschiedliche Stellungen bewegbares erstes Bedienelement umfasst, wobei die einzelnen Stellungen des ersten Bedienelements jeweils unterschiedlichen Unterstützungsgraden zugeordnet sind. Hierzu wird auf die vorstehenden Ausführungen zum Oberbegriff des nebengeordneten Anspruchs 1 verwiesen.

Die Bedieneinrichtung nach dem zweiten Aspekt der Erfindung kennzeichnet sich dadurch, dass dasselbe erste Bedienelement in derjenigen Stellung, die dem höchsten Unterstützungsgrad der unterschiedlichen Unterstützungsgrade zugeordnet ist, in einer von der ersten Bedienart verschiedenen Bedienart ohne Änderung dieser Stellung zum Aktivieren eines autonomen Fahrbetriebs betätigbar ist.

Wie vorstehend bereits erläutert, wird das Bedienelement also zur Aktivierung des autonomen Fahrbetriebs nicht in seiner Stellung in Bezug auf die erste Bedienart verändert, sondern verbleibt in dieser Stellung. Hierdurch ergibt sich der Vorteil, dass im Fall einer vom Fahrzeug initiierten Deaktivierung des autonomen Fahrbetriebs bei Übergabe der Fahraufgabe an den Fahrer in einer von der Fahrerassistenz nicht sicher beherrschbaren Fahrsituation das Bedienelement nicht in seiner in Bezug auf die erste Bedienart einstellbaren Stellung automatisch verändert werden muss. Dies würde nämlich ein entsprechend aufwändiges Bedienelement voraussetzen, welches über eine geeignete Aktorik automatisch in seiner Position verschiebbar wäre und beispielsweise bei automatischer Deaktivierung in die vorherige Stellung zurückspringen würde. Bei der Bedieneinrichtung nach dem zweiten Aspekt der Erfindung kann auf diese Aktorik verzichtet werden.

Außerdem ist sich der Fahrer aufgrund der von der ersten Bedienart verschiedenen Bedienart zum Aktiveren des autonomen Fahrbetriebs bewusst, dass er den autonomen Fahrmodus aktiviert. Sofern der Fahrer im Gegensatz zu diesem erfindungsgemäßen Konzept zum Aktivieren des autonomen Fahrmodus nur die Stellung des ersten Bedienelements durch die ersten Bedienart verändern muss, kann sich die Gefahr ergeben, dass der Fahrer ungewollt den autonomen Fahrbetrieb aktiviert, wenn er den Unterstützungsgrad ändert, oder ungewollt in den falschen Unterstützungsgrad umschaltet, obwohl der Fahrer den autonomen Fahrbetrieb aktivieren wollte.

Die vorstehenden Ausführungen zu der erfindungsgemäßen Bedieneinrichtung nach dem ersten Aspekt der Erfindung können in entsprechender Weise auch auf die erfindungsgemäße Bedieneinrichtung nach dem zweiten Aspekt der Erfindung übertragen werden.

Die Erfindung wird nachfolgend anhand eines Ausführungsbeispiels unter Zuhilfenahme der beigefügten Zeichnungen beschrieben. In diesen zeigen:
- Fig. 1: ein Ausführungsbeispiel eines erfindungsgemäßen Schiebestellers;
- Fig. 2: drei beispielhafte Zuordnungsschemata der Fahrmodi zu den Unterstützungsgraden;
- Fig. 3: eine beispielhafte Implementierung der Bedieneinrichtung; und
- Fig. 4: einen beispielhaften Schiebesteller mit drückbarem Wippelement.

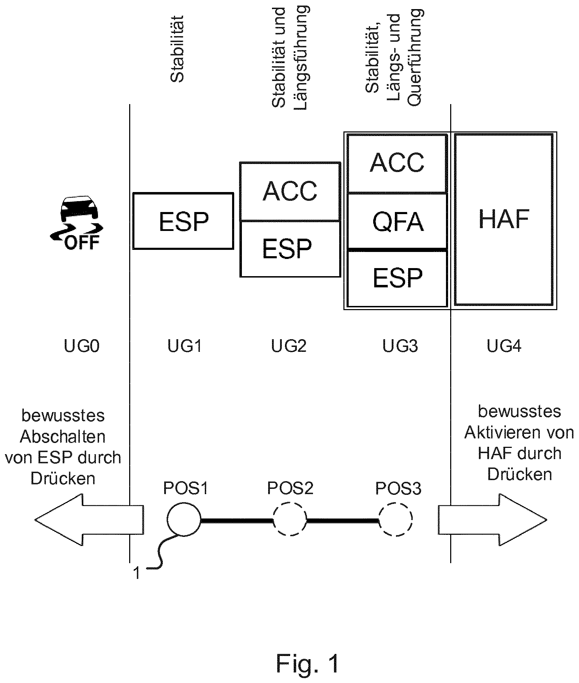

In Fig. 1 ist ein Ausführungsbeispiel eines erfindungsgemäßen Bedienkonzepts mit Schiebesteller 1 (Slider) schematisch dargestellt; das vorgestellte Bedienkonzept könnte auch auf einen Drehsteller statt eines Schiebestellers 1 angewandt werden.

Die Fahrerassistenz umfasst beispielsweise die folgenden Funktionen: Elektronisches Stabilitätsprogramm ESP, adaptive Geschwindigkeitsregelung ACC, Querführungsassistent QFA und hochautomatisiertes Fahren HAF.

Es sind n₁ verschiedene Stufen des Unterstützungsgrads der Fahrerassistenz vorgesehen. Im Beispiel von Fig. 1 sind n₁ (hier: n₁ = 5) verschiedene Stufen des Unterstützungsgrads UGy vorgesehen (mit y = 1, ... , n₁ -1, n₁), wobei der Unterstützungsgrad mit y zunimmt.

Der Schiebesteller 1 ist beispielsweise in n₂ unterschiedliche Stellungen POSx (mit x = 1, ... , n₂ -1, n₂) bewegbar, mit vorzugsweise n₂ = n₁ - 2 In dem Beispiel von Fig. 1 ist der Schiebesteller 1 in n₂ = n₁ - 2 = 3 verschiedene Stellpositionen POS1, POS2 und POS3 bewegbar. Die Positionen POSx sind unterschiedlichen Unterstützungsgraden zugeordnet, wobei mit Zunahme von x der Unterstützungsgrad zunimmt: In Fig. 1 ist die Position POS1 dem Unterstützungsgrad UG1, die Position POS2 dem Unterstützungsgrad UG2 und die Position POS3 dem Unterstützungsgrad UG3 zugeordnet.

Im Beispiel von Fig. 1 befindet sich der vom Fahrer mit einem oder mehreren Fingern bewegbare Schiebesteller beispielsweise in der Stellung POS1.

Im Beispiel von Fig. 1 ist in der linken Position POS1 - wie oberhalb von POS1 skizziert - beim Unterstützungsgrad UG1 das Elektronisches Stabilitätsprogramm ESP aktiviert und überwacht die Stabilität des Fahrzeugs. In der Position POS1 wird also eine Grundstabilität des Fahrzeugs durch das Elektronisches Stabilitätsprogramm ESP gewährleistet. Der Fahrer führt die Längsführung und Querführung des Fahrzeugs selbst durch.

In der mittleren Stellung POS2 übernimmt die Fahrerassistenz im Unterstützungsgrad UG2 die Längsführung des Fahrzeugs, wohingegen der Fahrer die Querführung des Fahrzeugs selbst durchführt. In der Position POS2 ist - wie oberhalb von POS2 skizziert - beispielsweise neben dem Elektronischen Stabilitätsprogramm ESP die adaptive Geschwindigkeitsregelung ACC aktiv. Die Position POS2 beinhaltet den Einfluss der Fahrerassistenz auf Längskräfte wie Beschleunigung, Verzögerung, Distanz.

In der rechten Stellung POS3 übernimmt die Fahrerassistenz im Unterstützungsgrad UG3 die Längsführung und Querführung des Fahrzeugs. In der Position POS3 ist - wie oberhalb von POS3 skizziert - beispielsweise neben dem Elektronischen Stabilitätsprogramm ESP und der adaptiven Geschwindigkeitsregelung ACC zusätzlich ein Querführungsassistent QFA aktiv. Der Querführungsassistent QFA ermöglicht ein selbstständiges Lenken, beispielsweise bis zu einer bestimmten Maximalgeschwindigkeit. Die Kombination aus ACC und QFA kann alternativ oder zusätzlich auch als Stauassistent zur automatischen Längs- und Querführung in einer Stausituation fungieren. Die Position POS3 beinhaltet neben den Assistenzfunktionen der Position POS2 zusätzlich den Eingriff des Fahrzeuges in Querbeschleunigungen (Lenkeingriff).

In der Position POS1 mit dem geringsten Unterstützungsgrad UG1 der drei Positionen POSx kann der Unterstützungsgrad auf den Unterstützungsgrad UG0 weiter verringert werden, indem der Schiebesteller nicht verschoben wird, sondern auf eine andere Bedienart betätigt wird, beispielsweise als drückbarer Schiebesteller 1 wie eine Taste gedrückt wird. Für die Verringerung des Unterstützungsgrads muss der Schiebesteller vorzugsweise für eine Zeitdauer größer gleich einer Mindestbetätigungszeitdauer tₘᵢₙ (z. B. t ₘᵢₙ = 2 s), nachfolgend als Langdrücken bezeichnet, gedrückt werden. Bei Verringerung des Unterstützungsgrads in der POS1 wird beispielsweise das Elektronische Stabilitätsprogramm ESP teilweise oder vollständig deaktiviert. Durch die Drück-Bedienhandlung kann der Fahrer bewusst zumindest teilweise das Elektronische Stabilitätsprogramm ESP abschalten. Der Fahrer muss dann für die Stabilität des Fahrzeugs ohne Unterstützung oder nur mit einer Teilunterstützung durch das Elektronische Stabilitätsprogramm ESP sorgen.

In der Position POS3 mit dem höchsten Unterstützungsgrad UG3 der drei Positionen POSx kann der Unterstützungsgrad auf den Unterstützungsgrad UG4 weiter erhöht werden, indem der Schiebesteller 1 nicht verschoben wird, sondern auf eine andere Bedienart betätigt wird, beispielsweise als drückbarer Schiebesteller 1 wie eine Taste gedrückt wird. Für die weitere Erhöhung des Unterstützungsgrads muss der Schiebesteller 1 durch Langdrücken betätigt werden. Bei Erhöhung des Unterstützungsgrads in der Stellung POS3 wird beispielsweise das hochautomatisierte Fahren HAF aktiviert. Durch die Drück-Bedienhandlung kann der Fahrer bewusst das hochautomatisierte Fahren HAF einschalten. Hierdurch geht die Verantwortung für die Führung des Fahrzeugs rechtlich an das Fahrzeug über; der Fahrer muss aber innerhalb einer bestimmten Reaktionszeit die Fahrzeugführung wieder übernehmen können.

Der Fahrer kann beispielsweise durch Drücken des Schiebestellers 1 vom Unterstützungsgrad UG0 wieder in den Unterstützungsgrad UG1 wechseln oder vom Unterstützungsgrad UG4 wieder in den Unterstützungsgrad UG3 umschalten.

Den einzelnen Unterstützungsgraden UGy können verschiedene, die Längsdynamik des Fahrzeugs beeinflussende Fahrmodi zugeordnet werden. Beispielsweise sind 5 Fahrmodi vorgesehen, die im Folgenden beispielhaft als sport+, sport, comfort, eco und eco pro bezeichnet werden. Der Fahrmodus sport+ weist die größte Agilität und den größten Kraftstoffverbrauch auf, wohingegen der Fahrmodus eco pro die geringste Agilität und den geringsten Kraftstoffverbrauch aufweist. Die Agilität nimmt in der obigen Reifenfolge der Fahrmodi von sport+ nach eco pro ab.

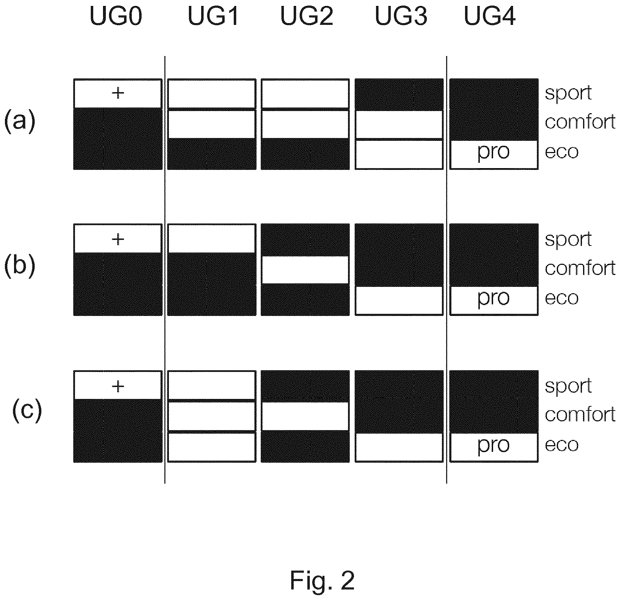

In Fig.2 sind neben (a), (b) und (c) drei verschiedene beispielhafte Möglichkeiten der Zuordnung dargestellt. Ein in dem jeweiligen Unterstützungsgrad UGy zulässiger Fahrmodus ist durch ein weißes Feld markiert, ein in dem jeweiligen Unterstützungsgrad UGy nicht zugelassener Fahrmodus ist durch ein schwarzes Feld markiert.

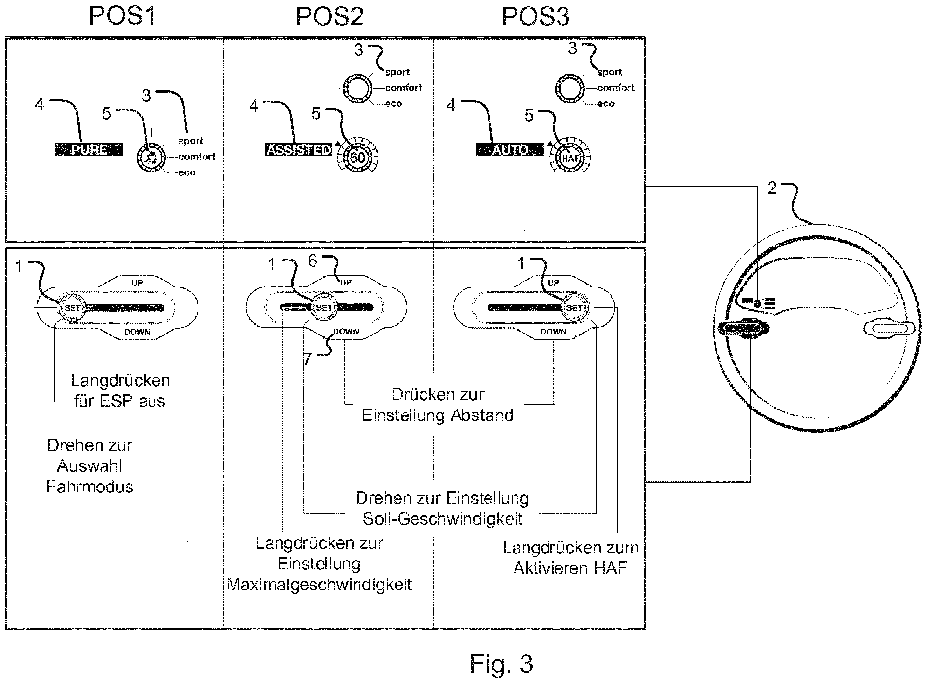

Im Beispiel (a) ist dem Unterstützungsgrad UG0 ohne ESP der Fahrmodus sport+ zugewiesen, der Fahrer hat hier keine Auswahlmöglichkeit. In den Unterstützungsgraden UG1, UG2 hat der Fahrer die Möglichkeit, zwischen den Fahrmodi sport und comfort zu wechseln. Bei einem Wechsel von UG0 auf UG1 wird beispielsweise der Fahrmodus sport automatisch voreingestellt. Die fahrerseitige Auswahl des Fahrmodus erfolgt vorzugsweise über den Schiebesteller 1, der dazu nicht verschoben wird, sondern der als beispielsweise drehbarer Schiebesteller 1 zur Auswahl gedreht wird, wie dies im Zusammenhang mit Fig. 3 noch näher erläutert werden wird. Im Unterstützungsgrad UG3 hat der Fahrer die Möglichkeit, zwischen den Fahrmodi comfort und eco zu wählen. Bei einem Wechsel von UG2 auf UG3 wird beispielsweise der Fahrmodus comfort automatisch voreingestellt, wenn in UG2 der Fahrmodus sport eingestellt war; bei einem Wechsel von UG3 auf UG2 wird beispielsweise der Fahrmodus comfort automatisch voreingestellt, wenn in UG3 der Fahrmodus eco eingestellt war. Bei Aktivierung des Unterstützungsgrads UG4 (hochautomatisiertes Fahren) wird beispielsweise automatisch der Fahrmodus eco pro voreingestellt.

Im Beispiel (b) ist jedem Unterstützungsgrad UGy nur ein einziger Fahrmodus zugeordnet, der vom Fahrzeug automatisch eingestellt wird, sobald der Fahrer den jeweiligen Unterstützungsgrad UGy aktiviert. Mit Zunahme des Unterstützungsgrads UGy nehmen beispielsweise die Agilität und der Kraftstoffverbrach des jeweils eingestellten Fahrmodus ab.

Im Beispiel (c) ist nur im Unterstützungsgrad UG1 eine freie Wahl des Fahrmodus durch den Fahrer möglich, in den übrigen Unterstützungsgraden erfolgt eine automatische Auswahl eines Fahrmodus durch das Fahrzeug ohne Wahlmöglichkeit durch den Fahrer.

In Fig. 3 ist eine beispielhafte Implementierung der vorstehend im Zusammenhang mit Fig. 1 diskutierten Bedieneinrichtung mit Schiebesteller 1 dargestellt. Der Schiebesteller 1 ist beispielsweise in einem Lenkrad 2 integriert, insbesondere auf einer Lenkradspeiche. Im oberen Rechteck in Fig. 3 ist die auf einer Anzeigeeinrichtung angezeigte Information dargestellt. Bei der Anzeigeeinrichtung handelt es sich beispielsweise um die Instrumentenkombination, die beispielsweise einen Bildschirm zur Ausgabe der in Fig. 3 dargestellten Anzeigeinformation umfasst.

Im unteren Rechteck in Fig. 3 ist die Bedienung des Schiebestellers 1 dargestellt.

Im linken Bereich der beiden Rechtecke ist der Zustand der Bedieneinrichtung bei Stellung des Schiebestellers 1 in der Stellung POS1 dargestellt. Im mittleren Bereich der beiden Rechtecke ist der Zustand der Bedieneinrichtung bei Stellung des Schiebestellers 1 in der Stellung POS2 dargestellt. Im rechten Bereich der beiden Rechtecke ist der Zustand der Bedieneinrichtung bei Stellung des Schiebestellers 1 in der Stellung POS3 dargestellt.

Bei dem Schiebesteller 1 in Fig. 3 handelt es sich um einen Schiebesteller 1 mit Dreh-Drücksteller. Der Schiebesteller 1 ist damit auf drei verschiedene Bedienarten zur Einstellung des Fahrzeugs betätigbar: Der Schiebesteller 1 kann in die verschiedenen Stellungen POSx verschoben werden, der Schiebesteller 1 kann wie ein Drehsteller gedreht werden und der Schiebesteller 1 kann gedrückt werden. Beispielsweise ist die Drückfunktion des Schiebesteller 1 als mechanische Taste realisiert, welche durch Drücken betätigt wird und danach in die Ausgangslage zurückkehrt. Es wäre aber auch denkbar, die Drückfunktion mittels einer nicht mechanischen Sensortaste zu implementieren, beispielsweise als kapazitive Taste oder als Touchpad.

Im Beispiel von Fig. 3 ist der Schiebesteller 1 in horizontaler Richtung verschiebbar. Der Schiebesteller 1 kann wie ein Drehknopf um eine Drehachse, die orthogonal zu der dem Fahrer zugewandten Seite des Schiebestellers 1 ist, gedreht werden. Ferner ist der Schiebesteller 1 drückbar auf der dem Fahrer zugewandten Seite des Schiebestellers, d. h. auf dem Drehknopf drückbar.

Wie bereits im Zusammenhang mit Fig. 1 diskutiert, kann der Schiebesteller 1 zur Auswahl einer der Unterstützungsgrade UG1 bis UG3 in die jeweils zugeordnete Position der Positionen POS1 bis POS3 verschoben werden.

In der Position POS1 kann vom Unterstützungsgrad UG1 durch Langdrücken des Schiebestellers 1 in den Unterstützungsgrad UG0 gewechselt werden, wobei dann das Elektronische Stabilitätsprogramm ESP ausgeschaltet wird.

Der Fahrmodus lässt sich durch Drehen des Schiebestellers 1 seitens des Fahrers einstellen, sofern dies vom System zugelassen wird und der Fahrmodus nicht automatisch ohne Wahlmöglichkeit des Fahrers eingestellt wird (vgl. hierzu Fig. 2). Wenn beispielsweise die Zuordnung (c) aus Fig. 2 verwendet wird, kann im Unterstützungsgrad UG1 in der Position POS1 durch Drehen des Schiebestellers 1 zwischen den drei Fahrmodi sport, comfort und eco gewählt werden. Zur Veränderung des Fahrmodus muss beispielsweise durch Drehen des Schiebestellers 1 ein Fahrmodus vorausgewählt werden und dann die Vorauswahl des Fahrmodus durch Drücken des Schiebestellers 1 bestätigt werden. Es wäre auch denkbar, dass vor der Vorauswahl der Schiebesteller zunächst gedrückt werden muss, bevor eine Vorauswahl durch Drehen vorgenommen werden kann. Während der Vorauswahl des Fahrmodus wird der jeweils aktuell vorausgewählte Fahrmodus in der Anzeigeeinrichtung durch ein Anzeigeobjekt 3 ausgegeben. Nach Betätigung der Vorauswahl wird der ausgewählte Fahrmodus dauerhaft in der Anzeige wiedergegeben.

Ferner ist in der Anzeige ein Anzeigeobjekt 4 vorgesehen, welches einen Hinweis über den aktuellen Unterstützungsgrad UGy liefert. Beispielsweise wird in den Unterstützungsgraden UG0 und UG1 als Anzeigeobjekt 4 der Hinweis "PURE" ausgegeben, im Unterstützungsgrad UG2 als Anzeigeobjekt 4 der Hinweis "ASSISTED" ausgegeben und in den Unterstützungsgraden UG3 und UG4 als Anzeigeobjekt 4 der Hinweis "AUTO" ausgegeben.

Vorzugsweise wird in der Anzeige mit dem Anzeigeobjekt 5 ein Hinweis an den Fahrer gegeben, welche Bedienfolge ein Langdrücken in dem aktuellen Zustand hat, da die Bedienfolge in dem Ausführungsbeispiel von dem aktuellen Zustand abhängt. Beispielsweise bewirkt ein Langdrücken in der Position 1 bei UG1 ein Ausschalten von ESP, in der Position 2 eine Einstellmöglichkeit der Maximalgeschwindigkeit einer Geschwindigkeitsbegrenzung oder in der Position 3 ein Einschalten des hochautomatisierten Fahrens HAF.

Sofern der Schiebesteller 1 in die Position POS2 verschoben wird, kann durch Drehen des Schiebestellers 1 die Soll-Geschwindigkeit der adaptiven Geschwindigkeitsregelung ACC seitens des Fahrers vorausgewählt werden. Die jeweils voreingestellte Soll-Geschwindigkeit wird beispielsweise auf der Anzeige dargestellt. Die dann eingestellte Vorauswahl der Soll-Geschwindigkeit muss dann zur Übernahme durch Drücken des Schiebestellers 1 bestätigt werden. Sofern eine Geschwindigkeit für die Geschwindigkeitsregelung gesetzt ist, wird dies in der Anzeige dargestellt.

Ferner kann eine Maximalgeschwindigkeit eines Geschwindigkeitsbegrenzers durch Langdrücken des Schiebestellers 1, anschließendem Drehen des Schiebestellers 1 zur Voreinstellung der Maximalgeschwindigkeit und abschließendem Drücken des Schiebestellers 1 zur Bestätigung der Maximalgeschwindigkeit eingestellt werden.

Sofern in der Position 2 (UG2) oder Position 3 (UG3) der Fahrmodus seitens des Fahrers gewählt werden kann, geschieht dies beispielsweise durch zweimaliges Drücken des Schiebestellers 1, anschließendem Drehen des Schiebestellers 1 zur Voreinstellung des Fahrmodus und abschließendem Drücken des Schiebestellers 1 zur Bestätigung des ausgewählten Fahrmodus.

Die Bedieneinrichtung kann neben dem Schiebesteller 1 noch weitere Bedienelemente aufweisen, beispielsweise zwei Tasten 6 und 7. Die Taste 6 ist vorzugsweise oberhalb des Verstellweges des Schiebestellers 1 angeordnet und die Taste 7 ist vorzugsweise unterhalb des Verstellweges des Schiebestellers 1 angeordnet. Durch Drücken der Taste 6 kann der Soll-Abstand der adaptiven Geschwindigkeitsregelung beispielsweise in der Unterstützungsgraden UG2 und UG3 erhöht werden; durch Drücken der Taste 7 kann der Soll-Abstand der adaptiven Geschwindigkeitsregelung beispielsweise in der Unterstützungsgraden UG2 und UG3 verringert werden.

Die Einstellung des Soll-Abstands könnte bei einer alternativen Implementierung auch durch Drehen des Schiebestellers 1 verändert werden.

Statt eines drückbaren Drehknopfs kann auch eine drückbare Einstellwalze verwendet werden, die um eine Drehachse gedreht werden kann, die parallel zu der Verschieberichtung des Schiebestellers 1 ist.

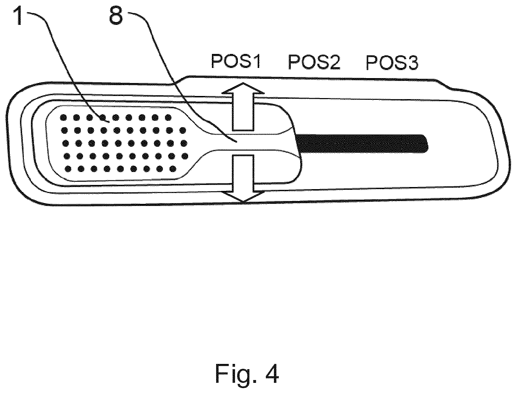

Statt eines Schiebestellers 1 mit Dreh-Drücksteller kann auch ein Schiebesteller 1 mit drückbarem Wippelement 8 verwendet werden. Ein Ausführungsbeispiel hierfür ist in Fig. 4 dargestellt. Der Schiebesteller 1 mit drückbarem Wippelement 8 ist horizontal in verschiedene Positionen POS1, POS2, POS3 verschiebbar, wobei die Mittelposition des Wippelements 8 die Position POSx bestimmt (in Fig. 4 befindet sich der Schiebesteller in POS1). Statt des Drehstellers in Fig. 3, welcher zur Einstellung gedreht wird, wird das Wippelement 8 verwendet, welches zur Einstellung nach oben (beispielsweise zum Erhöhen eines Parameters) und unten (beispielsweise zum Verringern eines Parameters) orthogonal zur Verschieberichtung des Schiebesteller 1 wippbar ist. Ferner kann das Wippelement 8 gedrückt werden.

## Patentansprüche

1. Bedieneinrichtung zur fahrerseitigen Vorgabe des Unterstützungsgrads (UGy) der Unterstützung des Fahrers eines Kraftfahrzeugs durch eine fahrzeugseitige Fahrerassistenz, umfassend ein auf eine erste Bedienart in zumindest drei diskrete unterschiedliche Stellungen (POSx) bewegbares erstes Bedienelement (1), wobei die einzelnen Stellungen (POSx) des ersten Bedienelements (1) jeweils unterschiedlichen Unterstützungsgraden (UGy) zugeordnet sind, wobei
dasselbe erste Bedienelement (1) in derjenigen Stellung (POS3), die dem höchsten Unterstützungsgrad (UG3) der unterschiedlichen Unterstützungsgrade zugeordnet ist, bei dem der Fahrer die Verantwortung für die Fahraufgabe hat, auf eine von der ersten Bedienart verschiedene Bedienart ohne Änderung dieser Stellung (POS3) zum Aktivieren eines autonomen Fahrbetriebs (HAF) betätigbar ist, wobei im autonomen Fahrbetrieb der Fahrer zumindest temporär die Verantwortung für die Fahraufgabe an das Fahrzeug abgibt.

2. Bedieneinrichtung nach Anspruch 1, wobei der höchste Unterstützungsgrad (UG3) der unterschiedlichen Unterstützungsgrade geringer als der Unterstützungsgrad (UG4) der Fahrerassistenz nach Aktivieren des autonomen Fahrbetriebs ist.

3. Bedieneinrichtung nach einem der vorhergehenden Ansprüche, wobei das erste Bedienelement (1) ein in die unterschiedlichen Stellungen (POSx) verschiebbarer Schiebesteller ist.

4. Bedieneinrichtung nach einem der vorhergehenden Ansprüche, wobei dasselbe erste Bedienelement (1) in zumindest einer der Stellungen (POSx) auf eine von der ersten Bedienart verschiedene Bedienart zur Einstellung des Fahrzeugs betätigbar ist.

5. Bedieneinrichtung nach Anspruch 4, wobei dasselbe erste Bedienelement (1) in zumindest einer der Stellungen (POSx) auf eine von der ersten Bedienart verschiedene Bedienart zur Einstellung des Fahrverhaltens des Fahrzeugs betätigbar ist.

6. Bedieneinrichtung nach Anspruch 5, wobei dasselbe erste Bedienelement (1) in zumindest einer der Stellungen auf die von der ersten Bedienart verschiedene Bedienart zur Auswahl eines Fahrmodus aus einer Mehrzahl von unterschiedlichen, die Längsdynamik des Fahrzeugs beeinflussenden, auswählbaren Fahrmodi betätigbar ist.

7. Bedieneinrichtung nach Anspruch 4, wobei dasselbe erste Bedienelement (1) in zumindest einer der Stellungen (POSx) auf eine von der ersten Bedienart verschiedene Bedienart zur Einstellung eines Parameters der Fahrerassistenz betätigbar ist, insbesondere zur Einstellung einer Soll-Fahrzeuggeschwindigkeit für eine Geschwindigkeitsregelung (ACC), eines Soll-Abstands für eine adaptive Geschwindigkeitsregelung (ACC) oder einer Maximalgeschwindigkeit für eine Geschwindigkeitsbegrenzungsfunktion.

8. Bedieneinrichtung nach Anspruch 7, wobei
- die Bedieneinrichtung zumindest ein weiteres Bedienelement (6, 7) umfasst,
- das erste Bedienelement (1) in zumindest einer der Stellungen (POSx) auf eine von der ersten Bedienart verschiedene Bedienart zur Einstellung einer Soll-Fahrzeuggeschwindigkeit oder eines Soll-Abstands für eine adaptive Geschwindigkeitsregelung betätigbar ist und
- das zumindest eine weitere Bedienelement (6, 7) zur Einstellung des Soll-Abstands bzw. der Soll-Fahrzeuggeschwindigkeit betätigbar ist.

9. Bedieneinrichtung nach einem der vorhergehenden Ansprüche, wobei dasselbe erste Bedienelement (1) in derjenigen Stellung (POS1), die dem geringsten Unterstützungsgrad (UG1) der unterschiedlichen Unterstützungsgrade zugeordnet ist, bei dem ein Fahrstabilitätsregelsystem (ESP) die Fahrstabilität überwacht, auf eine von der ersten Bedienart verschiedene Bedienart zum zumindest teilweisen Deaktivieren des Fahrstabilitätsregelsystems (ESP) betätigbar ist.

10. Bedieneinrichtung nach einem der vorhergehenden Ansprüche, wobei
- insgesamt n₁ unterschiedliche Unterstützungsgrade (UGy) einstellbar sind,
- das Bedienelement auf die erste Bedienart in insgesamt n₂ verschiedene Stellungen (POSx) bewegbar ist, mit n₂ < n₁, und
- n₂ - n₁ verschiedene Unterstützungsgrade (UGO, UG4) aktivierbar sind, indem das erste Bedienelement jeweils in einer bestimmten Stellung (POS1, POS3) der n₂ Stellungen auf eine jeweils von der ersten Bedienart verschiedene Bedienart ohne Änderung der aktuellen Stellung (POS1, POS3) betätigt wird.

11. Bedieneinrichtung nach einem der vorhergehenden Ansprüche, wobei
- die von der ersten Bedienart verschiedene Bedienart ein Drücken des ersten Bedienelements (1) ist und
- zum Aktivieren des autonomen Fahrbetriebs bzw. zum zumindest teilweisen Deaktivieren des Fahrstabilitätsregelsystems bzw. zum Aktivieren jedes der n₂ - n₁ Unterstützungsgrade (UGO, UG4) das erste Bedienelement (1) zu drücken ist, insbesondere für eine Zeitdauer größer oder größer gleich einer Zeitdauerschwelle.

12. Bedieneinrichtung nach einem der vorhergehenden Ansprüche, wobei das erste Bedienelement (1) zwischen diskreten Stellungen (POSx), insbesondere zwischen drei diskreten Stellungen, der nachfolgenden Stellungen bewegbar ist:
- eine Stellung (POS1), in der der Fahrer sowohl die Längsführung als auch die Querführung des Fahrzeugs selbst ausführt;
- eine Stellung (POS2), in der die Fahrerassistenz die Längsführung des Fahrzeugs übernimmt, jedoch nicht die Querführung;
- eine Stellung (POS3), in der die Fahrerassistenz sowohl die Längsführung als auch die Querführung des Fahrzeugs übernimmt.

13. Bedieneinrichtung nach einem der vorhergehenden Ansprüche, wobei
- die Bedieneinrichtung eingerichtet ist, bei fahrerseitigem Bewegen des ersten Bedienelements (1) von einer der Stellungen in eine andere der Stellungen einen automatischen Fahrmoduswechsel von einem Fahrmodus aus einer Mehrzahl von unterschiedlichen, die Längsdynamik des Fahrzeugs beeinflussenden, einstellbaren Fahrmodi zu einem anderen Fahrmodus der Fahrmodi auszulösen.

14. Bedieneinrichtung nach einem der vorgehenden Ansprüche, wobei das erste Bedienelement (1) in zumindest einer der Stellungen durch Drücken und/oder Drehen zur Einstellung des Fahrzeugs betätigbar ist.

15. Bedieneinrichtung nach einem der vorhergehenden Ansprüche, wobei das erste Bedienelement (1) auf zumindest drei verschiedenen Betätigungsarten betätigbar ist, insbesondere das erste Bedienelement neben der Bewegbarkeit in die verschiedenen Stellungen drehbar und drückbar ist.

16. Bedieneinrichtung nach Anspruch 15, wobei das erste Bedienelement ein in die unterschiedlichen Stellungen (POSx) verschiebbarer Schiebesteller (1)
- mit Dreh-Drücksteller, insbesondere mit einem drückbaren Drehknopf oder mit einer drückbaren Walze, oder
- mit drückbarem Wippelement (8), das in ein oder zwei entgegengesetzte Richtungen orthogonal zur Verschieberichtung des Schiebesteller (1) wippbar ist,
ist.

17. Kraftfahrzeug, umfassend
- eine Bedieneinrichtung nach einem der vorhergehenden Ansprüche und
- ein Lenkrad (2), wobei das Lenkrad (2) das erste Bedienelement (1) der Bedieneinrichtung umfasst.

## Claims

1. Operating device for the driver-side specification of an assistance degree (UGy) of the assistance of the driver of a motor vehicle by way of a vehicle-side driver assistance system, comprising a first operating element (1) which can be moved to a first operating type into at least three discrete different positions (POSx), the individual positions (POSx) of the first operating element (1) being assigned in each case two different assistance degrees (UGy),
it being possible for the same operating element (1) to be actuated in that position (POS3) which is assigned to the highest assistance degree (UG3) of the different assistance degrees, in the case of which the driver has the responsibility for the driving task, into an operating type which is different from the first operating type without changing this position (POS3) in order to activate autonomous driving operation (HAF), the driver relinquishing the responsibility for the driving task to the vehicle at least temporarily in autonomous driving operation.

2. Operating device according to Claim 1, the highest assistance degree (UG3) of the different assistance degrees being lower than the assistance degree (UG4) of the driver assistance system after activation of the autonomous driving operation.

3. Operating device according to either of the preceding claims, the first operating element (1) being a sliding button which can be displaced into the different positions (POSx).

4. Operating device according to one of the preceding claims, it being possible for the same first operating element (1) to be actuated in at least one of the positions (POSx) into an operating type which is different from the first operating type in order to adjust the vehicle.

5. Operating device according to Claim 4, it being possible for the same first operating element (1) to be actuated in at least one of the positions (POSx) into an operating type which is different from the first operating type in order to adjust the driving behaviour of the vehicle.

6. Operating device according to Claim 5, it being possible for the same first operating element (1) to be actuated in at least one of the positions into the operating type which is different from the first operating type in order to select a driving mode from a plurality of different selectable driving modes which influence the longitudinal dynamics of the vehicle.

7. Operating device according to Claim 4, it being possible for the same first operating element (1) to be actuated in at least one of the positions (POSx) into an operating type which is different from the first operating type in order to set the parameter of the driver assistance system, in particular in order to set a setpoint vehicle speed for a speed regulation system (ACC), a setpoint distance for an adaptive speed regulation system (ACC) or a maximum speed for a speed limiting function.

8. Operating device according to Claim 7,
- the operating device comprising at least one further operating element (6, 7),
- it being possible for the first operating element (1) to be actuated in at least one of the positions (POSx) into an operating type which is different from the first operating type in order to set a setpoint vehicle speed or a setpoint distance for an adaptive speed regulation system, and
- it being possible for the at least one further operating element (6, 7) to be actuated in order to set the setpoint distance and/or the setpoint vehicle speed.

9. Operating device according to one of the preceding claims, it being possible for the same first operating element (1) to be actuated in that position (POS1) which is assigned to the lowest assistance degree (UG1) of the different assistance degrees, in the case of which a driving stability regulating system (ESP) monitors the driving stability, into an operating type which is different from the first operating type for at least partial deactivation of the driving stability regulation system (ESP).

10. Operating device according to one of the preceding claims,
- it being possible for a total of n₁ different assistance degrees (UGy) to be set,
- it being possible for the operating element to be moved in the first operating type into a total of n₂ different positions (POSx), where n₂ < n₁, and
- it being possible for n₂ - n₁ different assistance degrees (UGO, UG4) to be activated, by the first operating element being actuated in each case in a certain position (POS1, POS3) of the n₂ positions into a respective operating type which is different from the first operating type without changing the current position (POS1, POS3).

11. Operating device according to one of the preceding claims,
- the operating type which is different from the first operating type being pressing of the first operating element (1), and
- the first operating element (1) having to be pressed, in particular for a time duration greater than or greater than or equal to the time duration threshold, in order to activate the autonomous driving operation or to at least partially deactivate the driving stability regulating system or in order to activate each of the n₂
- n₁ assistance degrees (UGO, UG4).

12. Operating device according to one of the preceding claims, it being possible for the first operating element (1) to be moved between discrete positions (POSx), in particular between three discrete positions, of the following positions:
- a position (POS1), in which the driver carries out both the longitudinal steering and the transverse steering of the vehicle themselves;
- a position (POS2), in which the driver assistance system takes over the longitudinal steering of the vehicle, but not the transverse steering;
- a position (POS3), in which the driver assistance system takes over both the longitudinal steering and the transverse steering of the vehicle.

13. Operating device according to one of the preceding claims,
- the operating device being configured, upon driver-side movement of the first operating element (1) from one of the positions into another one of the positions, to trigger an automatic driving mode change from one driving mode from a plurality of different driving modes which can be set and influence the longitudinal dynamics of the vehicle to another driving mode of the driving modes.

14. Operating device according to one of the preceding claims, it being possible for the first operating element (1) to be actuated in at least one of the positions by way of pressing and/or rotating in order to adjust the vehicle.

15. Operating device according to one of the preceding claims, it being possible for the first operating element (1) to be actuated in at least three different actuating types, it being possible, in particular, for the first operating element to be rotated and pressed in addition to the movability into the different positions.

16. Operating device according to Claim 15, the first operating element (1) being a sliding actuator which can be displaced into the different positions (POSx),
- with a rotary pushbutton, in particular with a rotary button which can be pressed or with a drum which can be pressed, or
- with a rocker element (8) which can be pressed and can be rocked in one or two opposite directions orthogonally with respect to the displacement direction of the sliding button (1).

17. Motor vehicle, comprising
- an operating device according to one of the preceding claims, and
- a steering wheel (2), the steering wheel (2) comprising the first operating element (1) of the operating device.

## Revendications

1. Dispositif de commande pour la spécification par le conducteur du niveau d'assistance (UGy) de l'aide à la conduite d'un véhicule automobile provenant d'une aide à la conduite côté véhicule, comprenant un premier élément de commande (1) déplaçable d'un premier type de commande dans au moins trois positions différentes distinctes (POSx), les différentes positions (POSx) du premier élément de commande (1) étant associées respectivement à différents niveaux d'assistance (UGy), dans lequel le même premier élément de commande (1), dans la position (POS3) qui est associée au niveau d'assistance le plus élevé (UG3) des différents niveaux d'assistance, dans lequel le conducteur a la responsabilité de la tâche de conduite, est apte à être actionné selon un mode de commande différent du premier mode de commande, sans modification de cette position (POS3), pour activer un mode de conduite autonome (HAF), le conducteur, en mode de conduite autonome, cédant au moins temporairement au véhicule la responsabilité de la tâche de conduite.

2. Dispositif de commande selon la revendication 1, dans lequel le niveau d'assistance le plus élevé (UG3) des différents niveaux d'assistance est inférieur au niveau d'assistance (UG4) de l'aide à la conduite après l'activation du mode de conduite autonome.

3. Dispositif de commande selon l'une des revendications précédentes, dans lequel le premier élément de commande (1) est une commande coulissante apte à être déplacée dans les différentes positions (POSx).

4. Dispositif de commande selon l'une des revendications précédentes, dans lequel le même premier élément de commande (1) est apte à être actionné dans au moins l'une des positions (POSx) selon un mode de commande différent du premier mode de commande pour le réglage du véhicule.

5. Dispositif de commande selon la revendication 4, dans lequel le même premier élément de commande (1) est apte à être actionné dans au moins l'une des positions (POSx) selon un mode de commande différent du premier mode de commande pour régler le comportement de conduite du véhicule.

6. Dispositif de commande selon la revendication 5, dans lequel le même premier élément de commande (1) est apte à être actionné dans au moins une des positions sur le mode de commande différent du premier mode de commande pour sélectionner un mode de conduite parmi une pluralité de modes de conduite différents aptes à être sélectionnés qui influencent la dynamique longitudinale du véhicule.

7. Dispositif de commande selon la revendication 4, dans lequel le même premier élément de commande (1) est apte à être actionné dans au moins l'une des positions (POSx) sur un mode de commande différent du premier mode de commande pour régler un paramètre de l'aide à la conduite, notamment pour régler une vitesse de consigne du véhicule pour un régulateur de vitesse (ACC), une distance de consigne pour un régulateur de vitesse adaptatif (ACC) ou une vitesse maximale pour une fonction de limitation de vitesse.

8. Dispositif de commande selon la revendication 7, dans lequel
- le dispositif de commande comprend au moins un autre élément de commande (6, 7),
- le premier élément de commande (1) est apte à être actionné dans au moins l'une des positions (POSx) selon un mode de commande différent du premier mode de commande pour régler une vitesse de consigne du véhicule ou une distance de consigne pour une régulation adaptative de la vitesse et
- l'au moins un autre élément de commande (6, 7) est apte à être actionné pour régler la distance de consigne ou la vitesse de consigne du véhicule.

9. Dispositif de commande selon l'une des revendications précédentes, dans lequel le même premier élément de commande (1) est apte à être actionné dans la position (POS1) qui est associée au plus faible niveau d'assistance (UG1) des différents niveaux d'assistance pour lesquels un système de régulation de la stabilité de conduite (ESP) surveille la stabilité de conduite, selon un mode de commande différent du premier mode de commande pour désactiver au moins partiellement le système de régulation de la stabilité de conduite (ESP).

10. Dispositif de commande selon l'une des revendications précédentes, dans lequel
- n₁ niveaux d'assistance (UGy) différents au total sont aptes à être réglés,
l'élément de commande est apte à être déplacé selon le premier mode de commande dans un total de n₂ positions différentes (POSx), avec n₂ < n₁, et
- n₂ - n₁ niveaux d'assistance différents (UGO, UG4) sont aptes à être activés en actionnant le premier élément de commande respectivement dans une position déterminée (POS1, POS3) des n₂ positions sur un mode de commande respectivement différent du premier mode de commande sans modification de la position actuelle (POS1, POS3).

11. Dispositif de commande selon l'une des revendications précédentes, dans lequel
- le mode de commande différent du premier mode de commande est un appui sur le premier élément de commande (1) et
- pour activer le mode de conduite autonome ou pour désactiver au moins partiellement le système de régulation de la stabilité de conduite ou pour activer chacun des n₂ - n₁ niveaux d'assistance (UGO, UG4), il faut appuyer sur le premier élément de commande (1), notamment pendant une durée supérieure ou égale à un seuil de durée.

12. Dispositif de commande selon l'une des revendications précédentes, dans lequel le premier élément de commande (1) est mobile entre des positions distinctes (POSx), notamment entre trois positions distinctes, des positions suivantes :
- une position (POS1) dans laquelle le conducteur effectue lui-même à la fois le guidage longitudinal et le guidage transversal du véhicule ;
- une position (POS2) dans laquelle l'aide à la conduite assure le guidage longitudinal du véhicule, mais pas le guidage transversal ;
- une position (POS3) dans laquelle l'aide à la conduite assure à la fois le guidage longitudinal et le guidage transversal du véhicule.

13. Dispositif de commande selon l'une des revendications précédentes, dans lequel
- le dispositif de commande est agencé pour déclencher, lors du déplacement côté conducteur du premier élément de commande (1) d'une des positions à une autre des positions, un changement automatique de mode de conduite d'un mode de conduite parmi une pluralité de modes de conduite réglables différents, influençant la dynamique longitudinale du véhicule, à un autre mode de conduite parmi les modes de conduite.

14. Dispositif de commande selon l'une des revendications précédentes, dans lequel le premier élément de commande (1) est apte à être actionné dans au moins l'une des positions par pression et/ou rotation pour régler le véhicule.

15. Dispositif de commande selon l'une des revendications précédentes, dans lequel le premier élément de commande (1) est apte à être actionné selon au moins trois modes d'actionnement différents, en particulier le premier élément de commande est apte à être tourné et poussé dans les différentes positions en plus d'être mobile.

16. Dispositif de commande selon la revendication 15, dans lequel le premier élément de commande est une commande coulissante (1) qui est apte à être déplacée dans les différentes positions (POSx)
- au moyen d'un bouton-poussoir rotatif, en particulier avec un bouton rotatif apte à être enfoncé ou avec un rouleau apte à être enfoncé, ou
- avec un élément basculant (8) apte à être pressé, qui est apte à être basculé dans une ou deux directions opposées orthogonales à la direction de déplacement de la commande coulissante (1).

17. Véhicule automobile, comprenant
- un dispositif de commande selon l'une des revendications précédentes, et
- un volant de direction (2), le volant de direction (2) comprenant le premier élément de commande (1) du dispositif de commande.
